# EUROPÄISCHE PATENTSCHRIFT

(11) **EP 2 702 448 B1**
(45) Veröffentlichungstag und Bekanntmachung des Hinweises auf die Patenterteilung: **08.05.2019**
(21) Anmeldenummer: 12708527.2
(22) Anmeldetag: 06.03.2012
(51) Int. Cl.: F21V 7/18, G03B 15/06

(54) **FALT-REFLEKTOR**
FOLDABLE REFLECTOR
RÉFLECTEUR PLIABLE

(30) Priorität: 27.04.2011 DE 102011002296; 03.08.2011 DE 102011052394
(43) Veröffentlichungstag der Anmeldung: 05.03.2014
(73) Patentinhaber: Bron Elektronik AG, 4123 Allschwil 1 (CH)
(72) Erfinder: PORTMANN, Francois, F-68330 Huningue (FR)
(74) Vertreter: Popp, Eugen
(86) Internationale Anmeldenummer: PCT/EP2012/053780
(87) Internationale Veröffentlichungsnummer: WO 2012/146426

(56) Entgegenhaltungen:
- WO-A1-82/00545
- US-A- 2 205 860
- US-A- 3 286 270
- US-A- 5 198 832
- US-A1- 2008 137 352

## Beschreibung

Die Erfindung betrifft einen Falt-Reflektor gemäß dem Oberbegriff des Anspruchs 1.

US 2 205 860 A offenbart einen Falt-Reflektor mit kranzförmig an einem Lagerkörper angelegten Schirmspeichen, durch die eine reflektierende Bespannung aufspannbar ist. Ein Falt-Reflektor ist weiterhin aus der DE 20 2004 001 528 U1 bekannt. Der Reflektor ist schirmartig aufspannbar und weist an einem Lagerkörper kranzförmig angelenkte Schirmspeichen auf, durch die eine reflektierende Bespannung aufspannbar ist. Der Reflektor dient insbesondere zur Reflektion von elektromagnetischen Wellen und insbesondere von Lichtwellen und/oder Schallwellen. Derartige Reflektoren werden beispielsweise in der Fotografie für Beleuchtungszwecke eingesetzt. Durch den schirmartigen Aufbau mit Schirmspeichen ist der Reflektor für den mobilen Einsatz zum Zwecke des Transports zusammenlegbar und am Einsatzort aufspannbar. Das Aufspannen der Schirme ist häufig aufwändig und erfordert ein nicht unerhebliches Maß an Kraftaufwand, was insbesondere bei größeren Schirmen nachteilig ist. Andere herkömmliche Falt-Reflektoren sind in US 2008/137352 A1, US 5198832 A, US 3286270 A und WO 82/00545 offenbart.

Aufgabe der vorliegenden Erfindung ist es daher, einen Falt-Reflektor gemäß Anspruch 1 so auszubilden, dass er bequem von einer einzigen Person aufgespannt und wieder zusammengefaltet werden kann, und zwar unabhängig von der Größe des Schirms bzw. des Reflektors. Vor allen Dingen soll es möglich sein, den Falt-Reflektor ohne großen Kraftaufwand aufzuspannen und wieder zusammenzufalten.

Die oben genannte Aufgabe wird durch einen Falt-Reflektor mit den Merkmalen des Anspruchs 1 gelöst. Der Falt-Reflektor umfasst Schirmspeichen, die kranzförmig an einem Lagerkörper angelenkt sind, wobei durch die Schirmspeichen eine reflektierende Bespannung des Reflektors in seiner vollen Größe aufspannbar ist. Der Falt-Reflektor zeichnet sich dadurch aus, dass die Schirmspeichen an den ihrer Anlenkung zugekehrten Enden sich jeweils über diese Anlenkung hinaus erstrecken, und dass durch Einwirkung auf diese sich über die Anlenkung hinaus erstreckenden Abschnitte der Schirmspeichen diese in Aufspannstellung und umgekehrt bewegbar sind.

Ein wesentlicher Punkt der Erfindung liegt also darin, dass gänzlich auf den Einsatz von Spreizspeichen verzichtet werden kann, welche üblicherweise mit den Schirmspeichen zum Zwecke des Aufspannens verbunden sind, wie beispielsweise in der DE 20 2004 001 528 U1 gezeigt ist. Dadurch entfällt auch ein als Träger für die Spreizspeichen dienender "Schirmstock". Vielmehr kommt bei der vorliegenden Erfindung ein gegenüber dem Stand der Technik vollkommen unterschiedlicher Aufspannmechanismus zum Einsatz, der nämlich ein Aufspannen des Schirms dadurch bewirkt, dass Mittel zum Ausüben einer Krafteinwirkung auf Abschnitte der Schirmspeichen vorgesehen sind, die sich über die Anlenkung der Schirmspeichen in dem Lagerkörper hinaus erstrecken, und zwar über diejenige Seite des Lagerkörpers hinaus, die der Bespannung des Reflektors gegenüber liegt. Folglich muss zum Aufspannen des Reflektorschirms lediglich ein geeigneter Mechanismus zum Einwirken auf die über den Lagerkörper hinausragenden Abschnitte der Schirmspeichen vorgesehen sein, der auf verschiedene Art und Weise ausgebildet sein kann. Dadurch entfällt die Notwendigkeit von Spreizspeichen und eines Schirmstocks, wodurch das Aufspannen des Reflektorschirms einfach durchführbar ist und der hierfür erforderliche Kraftaufwand auf ein Minimum reduziert werden kann. Weiterhin ist der Reflektor dadurch kostengünstiger herstellbar und Zubehör kann wesentlich flexibler mit dem Reflektor verbunden werden. Vor allem ist es durch den spreizspeichenlosen Aufspannmechanismus möglich, eine Lichtquelle bis in den Scheitelpunkt des Schirms hineinzuverlegen, so dass bei einer Parabolform des Schirms kurze Brennweiten einstellbar sind. Vorzugsweise liegt der Brennpunkt des aufgespannten Schirms etwas vor dem Schirmscheitelpunkt, so dass die Lichtquelle bei Bedarf auch über den Brennpunkt hinaus in Richtung zum Schirmscheiteipunkt verlagert werden kann, sofern dies fotografisch gefordert sein sollte.

Bei der Erfindung ist zur Einwirkung auf die über den Lagerkörper hinausstehenden Abschnitte der Schirmspeichen eine Druckplatte vorgesehen, die insbesondere als Druckring ausgebildet ist, wobei die Druckplatte bzw. der Druckring und der Lagerkörper relativ zueinander verlagerbar sind. Durch eine Verringerung des Abstandes zwischen dem Lagerkörper und der Druckplatte, kann auf die über den Lagerkörper überstehenden Schirmspeichenabschnitte, die vorzugsweise zwischen dem Lagerkörper und der Druckplatte angeordnet, insbesondere eingeklemmt sind, eine Kraft in Richtung des Lagerkörpers ausgeübt werden. Sobald eine Kraftauswirkung auf die überstehenden Abschnitte der Schirmspeichen in Richtung des Lagerkörpers erfolgt, werden die Abschnitte der Schirmspeichen in Richtung des Lagerkörpers bewegt/verdreht, wodurch eine Drehbewegung der Schirmspeichen um den Anlenkpunkt in dem Lagerkörper herum radial nach innen bewirkt wird, so dass also der Reflektor in seine aufgespannte Funktionsstellung bringbar ist.

Um die relative Verlagerung zwischen der Druckplatte und dem Lagerkörper, d.h. insbesondere eine Variation des Abstandes zwischen diesen beiden Elementen zu bewirken, ist eine Betätigungseinrichtung vorgesehen, die insbesondere einen Führungsbolzen umfasst, der einerseits mit dem Lagerkörper und andererseits mit der Druckplatte verbunden ist, und zwar derart, dass eine Aktivierung der Betätigungseinrichtung eine Verlagerung der Druckplatte entlang des Führungsbolzens in Richtung des Lagerkörpers bewirkt. Der Lagerkörper ist bei dieser Ausführungsform ortsfest mit dem Führungsbolzen verbunden. Weiterhin kann die Betätigungseinrichtung einen manuell betätigbaren Hebel aufweisen, der eine Verlagerung der Druckplatte bewirkt. Es versteht sich, dass sämtliche Betätigungsmittel auch elektrisch ausgebildet sein können, so dass eine Einwirkung auf die überstehenden Schirmspeichenabschnitte automatisch bzw. maschinell "per Knopfdruck" erfolgt. Vorzugsweise sind mehrere manuelle Betätigungseinrichtungen vorgesehen, wobei eine Betätigungseinrichtung jeweils mehreren überstehenden Schirmspeichenabschnitten zugeordnet ist. Hierdurch reduziert sich die durch einen Bediener aufzubringende Kraft auf ein Minimum. Weiterhin wird durch die Einwirkung auf die Schirmspeichenabschnitte mittels einer Druckplatte die Handhabbarkeit des Reflektors gegenüber den herkömmlichen aufspannbaren Reflektoren wesentlich verbessert.

Die relative Verlagerung zwischen der Druckplatte und dem Lagerkörper kann vorteilhafterweise auch mittels einer maschinellen Betätigungseinrichtung erfolgen,
und insbesondere mittels eines elektromagnetischen, eines pneumatischen oder eines hydraulischen Antriebs,

Der Lagerkörper des Reflektors ist vorzugsweise ringförmig, d.h. als Lagerring ausgebildet und kann gemäß der Erfindung vorzugsweise zur Aufnahme eines Adapterelements, insbesondere eines Adapterflansches zur Befestigung von Zubehör, insbesondere für die Fotografie, an dem Reflektor ausgebildet sein. Weiterhin ist es denkbar, dass ein derartiges Adapterelement einstückig mit dem Lagerkörper ausgebildet ist.

Bei dem Zubehör, welches an dem Adapterelement befestigbar ist, kann es sich beispielsweise um Beleuchtungseinrichtungen, Fokushalterungen oder dergleichen Zubehör für die Fotografie handeln. Grundsätzlich ist es aber auch denkbar zumindest Teile einer Soundanlage, wie beispielsweise Lautsprecher oder dergleichen Zubehör zumindest mittelbar mit dem Adapterelement zu verbinden. Das Adapterelement ist vorzugsweise ringförmig ausgebildet und weist folglich eine zentrische Aussparung auf, wobei sein Außendurchmesser vorzugsweise dem Innendurchmesser des Lagerrings entspricht und sein Innendurchmesser bzw. allgemein gesagt seine innere Querschnittsform jeweils an zugehöriges zu befestigendes Zubehör angepasst sein kann. Dadurch ist der Reflektor flexibel für nahezu jeden erdenklichen Zweck einsetzbar und mit beliebigem Zubehör schnell und einfach verbindbar.

Durch den Lagerkörper erstreckt sich vorzugsweise ein stabförmiger Träger für eine Lichtquelle längsverschieblich hindurch, wobei der stabförmige Träger vorzugsweise an dem Lagerkörper und insbesondere an dem Adapterelement als Zubehör befestigt ist. Der stabförmige Träger erstreckt sich derart durch den Lagerkörper hindurch, dass die Lichtquelle innerhalb der Schirmbespannung axial, d.h. vorzugsweise in Richtung der Längsmittelachse des aufgespannten Reflektorschirms verlagerbar ist. Wenn die Lichtquelle an dem stirnseitigen Ende des stabförmigen Trägers angeordnet ist, kann sie auf der Längsmittelachse des aufgespannten Reflektors liegen. Besonders vorteilhaft ist es, wenn die Lichtquelle auf dem stabförmigen Träger längsverschieblich gelagert ist, d.h., dass sie entlang der Längsmittelachse des aufgespannten Reflektors prinzipiell jede beliebige Position in dem Reflektor einnehmen kann.

Die sich über die Anlenkung an dem Lagerkörper hinauserstreckenden Abschnitte der Schirmspeichen sind, wie oben bereits erwähnt wurde, bei der ersten Ausführungsform der Erfindung zwischen dem Lagerkörper und der Druckplatte bzw. dem Druckring angeordnet und vorzugsweise eingeklemmt, und zwar derart, dass sie sowohl im aufgespannten als auch im zusammengefalteten Zustand des Reffektorschirms ihre Anlenkung an dem Lagerkörper beibehalten, so dass ein versehentliches Herausrutschen des Reflektors bzw. der Schirmspeichen aus dem Lagerkörper vermieden wird.

Der Lagerkörper ist vorzugsweise ringförmig ausgebildet und weist zur Anlenkung der Schirmspeichen Schlitze auf, die radial in dem Lagerkörper angeordnet sind und zur Umfangsfläche des Lagerkörpers hin offen sind. Die Anlenkung der Schirmspeichen an dem Lagerkörper ist auf diese Art und Weise besonders einfach und erfordert grundsätzlich keine zusätzlichen Befestigungsmittel, obwohl diese selbstverständlich zur Sicherung der Anlenkung der Schirmspeichen in dem Lagerkörper vorgesehen sein können.

Bei einer weiteren Ausführungsform der Erfindung kann vorgesehen sein, dass die Einwirkung auf die sich über die Anlenkung der Schirmspeichen in dem Lagerkörper hinaus erstreckenden Abschnitte derselben durch ein an deren freien Enden angreifendes Kabel, Seil oder dergleichen erfolgt, mittels dem die erwähnten Abschnitte radial nach innen ziehbar sind. Vorzugsweise ist dann jedem überstehenden Abschnitt einer Schirmspeiche ein Seil, Kabel oder dergleichen zugeordnet. Denkbar ist es grundsätzlich jedoch auch, sämtliche überstehenden Abschnitte der Schirmspeichen mit einem einzigen Kabel, Seil oder dergleichen zu verbinden, so dass durch einen Zug an dem Seil, Kabel oder dergleichen eine Einwirkung erfolgt, insbesondere eine Kraft auf die über den Lagerkörper hinausragenden Abschnitte der Schirmspeichen ausgeübt wird und diese folglich in Richtung des Inneren des Lagerkörpers verschwenkt werden. Eine Verschwenkung bzw. eine Drehbewegung der überstehenden Abschnitte der Schirmspeichen in Richtung des Inneren des Lagerkörpers hat wiederum zur Folge, dass die der Bespannung zugeordneten Abschnitte der Schirmspeichen radial nach außen schwenken, so dass also der Reflektor in seiner Aufspannstellung gebracht wird. In der Aufspannstellung sind die Schirmspeichen durch entsprechende Mittel fixierbar.

Damit die Schirmspeichen sicher in dem Lagerkörper angelenkt werden können und ein Herausrutschen derselben verhindert wird, und um darüber hinaus eine optimale Einwirkung auf die über den Lagerkörper herausstehenden Abschnitte der Schirmspeichen zu gewährleisten, sind die in Rede stehenden Abschnitte gegenüber dem Rest der jeweiligen Schirmspeichen vorzugsweise in ihrem Durchmesser vergrößert. Der vergrößerte Durchmesser der Schirmspeichen im Bereich der überstehenden Abschnitte kann bereits während der Herstellung der Schirmspeichen integral erzeugt werden oder aber ein zusätzliches Element, beispielsweise eine Hülse oder dergleichen, kann mit den über den Lagerkörper herausragenden Abschnitten der Schirmspeichen verbunden, insbesondere geklemmt, verklebt oder verschraubt sein.

Schließlich kann der Lagerkörper an einem Stativ befestigt sein. Alternativ oder auch zusätzlich kann der Falt-Reflektor über Befestigungsmittel verfügen, durch die er insbesondere an einer Decke aufhängbar ist. Weiterhin ist es denkbar, dass die reflektierende Bespannung an ihrer Außenseite Säume zur Aufnahme der Schirmspeichen aufweist. Der Reflektor kann wenigstens 8 oder 12, insbesondere 16, vorzugsweise 24 Schirmspeichen aufweisen. Grundsätzlich kann jedoch auch jede andere beliebige Anzahl an Schirmspeichen vorgesehen sein. Die Schirmspeichen selber sind vorzugsweise aus glasfaserverstärktem Kunststoff, aus kohlefaserverstärktem Kunststoff und/oder aus Metall, insbesondere aus Stahl ausgebildet.

Bei einer vorteilhaften Ausführungsform der Erfindung kann vorgesehen sein, dass die Betätigungseinrichtung eine Verlagerung der Druckplatte entlang eines Gewindebolzens bewirkt. Die Betätigungseinrichtung zur Verlagerung der Druckplatte ist dann vorzugsweise als manuell oder motorisch betriebenes Planetengetriebe ausgebildet.

Weiterhin kann bei einer anderen Ausführungsform vorgesehen sein, dass die Betätigungseinrichtung ein ein Außengewinde aufweisendes Führungsrohr aufweist, weiches mit dem Lagerkörper drehfest verbunden ist, und welches mit dem Innengewindeabschnitt eines Rohrelements zusammenwirkt, welches mit der Druckplatte drehbeweglich verbunden ist. Das Rohrelement ist vorzugsweise mittels eines Handgriffs drehbar. Denkbar ist grundsätzlich aber auch eine maschinelle, insbesondere (elektro-)motorische Betätigung des Rohrelements.

Die Erfindung wird im Folgenden anhand der Zeichnung näher erläutert. Es zeigen:
- Fig. 1: eine Schnittdarstellung des Falt-Reflektors in Aufspannstellung;
- Fig. 2: eine perspektivische Rückseitendarstellung des Fait-Reflektors in Aufspannstellung;
- Fig. 3: eine Rückseitenansicht des Falt-Reflektors in Aufspannstellung;
- Fig. 4: eine schematische Schnittdarstellung eines Falt-Reflektors in zusammengefaltetem Zustand;
- Fig. 5: eine Detaildarstellung des Falt-Reflektors in zusammengefaltetem Zustand;
- Fig. 6: eine Stirnseitenansicht eines Adapterelements;
- Fig. 7: eine perspektivische Darstellung des Adapterelements gemäß Fig. 6;
- Fig. 8: eine Unterseitenansicht eines Schirmspeichen-Gelenkkopfes;
- Fig. 9: eine perspektivische Darstellung des Schirmspeichen-Gelenkkopfes gemäß Fig. 8;
- Fig. 10: eine perspektivische Darstellung des Lagerkörpers;
- Fig. 11: eine perspektivische Darstellung des Falt-Reflektors mit einer daran befestigten Beleuchtungseinrichtung;
- Fig. 12: eine perspektivische Darstellung der Beleuchtungseinrichtung gemäß Fig. 11;
- Fig. 13: eine perspektivische Rückseitenansicht eines an einem Stativ befestigten Falt-Reflektors;
- Fig. 14: eine weitere perspektivische Rückseitenansicht des Falt-Reflektors gemäß Fig. 13;
- Fig. 15: eine perspektivische Frontseitenansicht des Falt-Reflektors mit einer als Adapterelement ausgebildeten Halteeinrichtung;
- Fig. 16: eine perspektivische Frontseitenansicht des Falt-Reflektors mit einer an der Halteeinrichtung befestigten Beleuchtungseinrichtung;
- Fig. 17: eine perspektivische Frontseitenansicht des Falt-Reflektors mit einer alternativen Beleuchtungseinrichtung;
- Fig. 18: eine perspektivische Darstellung eines Falt-Reflektors nach einer weiteren Ausführungsform der Erfindung;
- Fig. 19: eine perspektivische Rückseitenansicht eines Falt-Reflektors in Aufspannstellung gemäß der weiteren Ausführungsform;
- Fig. 20: eine Draufsicht auf die Rückseite eines zusammengefalteten Falt-Reflektors gemäß der weiteren Ausführungsform;
- Fig. 21: eine Rückseitenansicht auf einen Falt-Reflektor in Aufspannstellung gemäß der weiteren Ausführungsform;
- Fig. 22: eine Schnittdarstellung eines Falt-Reflektors in Aufspannstellung gemäß der weiteren Ausführungsform;
- Fig. 23: eine Schnittdarstellung eines zusammengefalteten Falt-Reflektors nach noch einer weiteren Ausführungsform der Erfindung;
- Fig. 24: eine weitere Schnittdarstellung des Falt-Reflektors in Aufspannstellung gemäß der weiteren Ausführungsformen;
- Fig. 25: eine Schnittdarstellung eines Falt-Reflektors in Aufspannstellung mit einem einstückigen stangenförmigen Trägerelement, und
- Fig. 26: der Falt-Reflektor gemäß Fig. 26 in einem zusammengefalteten Zustand.

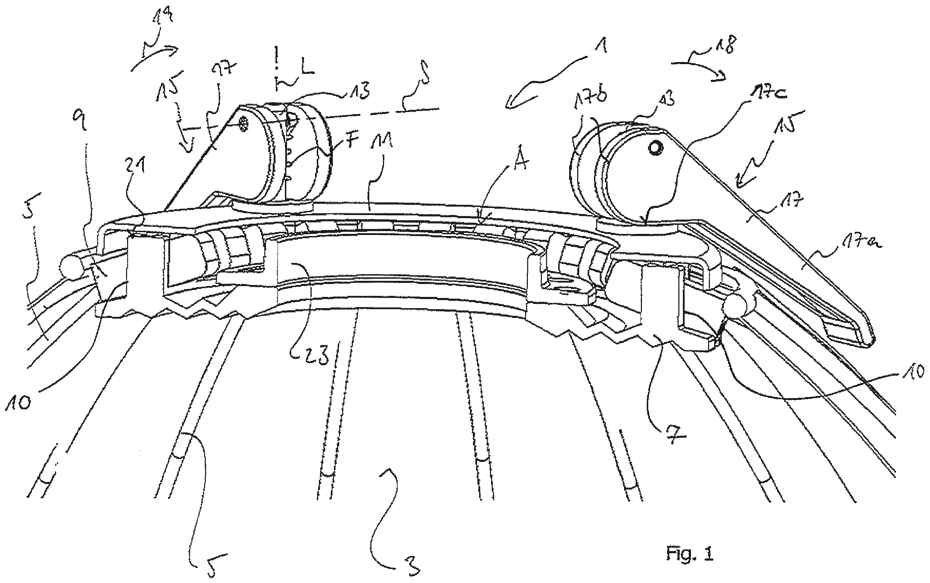

Fig. 1 zeigt eine perspektivische Schnittdarstellung eines Falt-Reflektors 1, im Folgenden nur noch Reflektor genannt, in aufgespanntem Zustand (Aufspannstellung) gemäß einer Ausführungsform der Erfindung. Der Reflektor 1 umfasst eine reflektierende Bespannung 3, die mit Hilfe von Schirmspeichen 5 aufspannbar ist. Zur Befestigung der Schirmspeichen 5 an der reflektierenden Bespannung 3 kann diese beispielsweise an ihrer Außenseite Säume zur Aufnahme der Schirmspeichen 5 aufweisen. Grundsätzlich können die Schirmspeichen 5 jedoch auch auf andere Art und Weise an der Bespannung 3 angebracht sein. Insbesondere können auch an ihrer Innenseite Befestigungsmittel, insbesondere Schlaufen, vorzugsweise Gummischlaufen, zur Befestigung der Schirmspeichen vorgesehen sein. Die Schirmspeichen 5 sind an einem Lagerkörper 7, der hier als Lagerring ausgebildet ist, angelenkt und weisen an den ihrer Anlenkung zugekehrten Enden jeweils über die Anlenkung hinauserstreckende Abschnitte 9 auf, die als Schirmspeichen-Gelenkköpfe ausgebildet sind bzw. solche aufweisen. Die Schirmspeichenabschnitte 9 erstrecken sich also über die der Bespannung 3 gegenüberliegende Seite des Lagerkörpers 7 hinaus und bilden Gelenkköpfe, die ein Verschwenken der Schirmspeichen 5 bezüglich ihres Anlenkpunktes in dem Lagerkörper 7 ermöglichen.

In der in Fig. 1 gezeigten Ausführungsform ist der Lagerkörper 7 ringförmig ausgebildet und umfasst sich radial erstreckende Schlitze 10, die in der Fig. 1 nur andeutungsweise erkennbar sind. Die radialen Schlitze 10 ermöglichen die kranzförmige Anlenkung der Schirmspeichen 5 an dem Lagerkörper 7 und sie sind zu der Umfangsfläche des Lagerkörpers 7 hin offen ausgebildet, um die Aufnahme der Schirmspeichen 5 zu ermöglichen. Durch die Anlenkung der Schirmspeichen 5 an/in dem Lagerkörper 7 sind diese drehbeweglich gelagert und ermöglichen auf diese Weise grundsätzlich eine Verlagerung der Schirmspeichen 5 von einer zusammengefalteten in die in Fig. 1 gezeigte aufgespannte Stellung.

Für die Anlenkung der Schirmspeichen 5 in dem Lagerkörper 7 können statt der radialen Schlitze auch kranzförmig auf bzw. in dem Lagerkörper angeordnete Bohrungen, insbesondere in radialer Richtung länglich ausgebildete Durchgangsbohrungen in dem Lagerkörper 7 vorgesehen sein, die eine Verbindung zwischen der der Bespannung 3 des Reflektors 1 zugewandten Seite des Lagerkörpers 7 mit der der Bespannung 3 des Reflektors 1 abgewandten bzw. gegenüberliegenden Seite des Lagerkörpers 7 herstellen, Grundsätzlich sind jedoch auch andere Möglichkeiten denkbar, wie eine Anlenkung der Schirmspeichen 5 derart an dem Lagerkörper 7 erfolgen kann, dass sie ein Verschwenken der Schirmspeichen 5 in ihre Aufspannstellung und umgekehrt ermöglicht.

Bei der in Fig. 1 gezeigten Ausführungsform der Erfindung wird eine Krafteinwirkung auf die überstehenden Abschnitte 9 der Schirmspeichen 5 durch eine Druckplatte und insbesondere durch einen Druckring 11 ausgeübt, der hier beispielhaft im Wesentlichen denselben Außendurchmesser wie der Lagerkörper 7 aufweist. Der Druckring 11 ist im Wesentlichen parallel zu dem Lagerkörper 7 und zwar auf der der Bespannung 3 gegenüberliegenden Seite des Lagerkörpers 7 angeordnet. Weiterhin ist der Druckring 11 über mehrere Führungsbolzen 13 mit dem Lagerkörper 7 verbunden.

Der Lagerkörper 7 und der Druckring 11 sind relativ zueinander bewegbar, so dass also der Abstand zwischen ihnen veränderbar ist. Eine Verlagerung des Druckrings 11 kann mittels einer Betätigungseinrichtung 15 erfolgen, die mit dem Führungszapfen 13 zusammenwirkt bzw. diesen umfasst. Der Führungszapfen 13 ist einerseits mit dem Lagerkörper 7 fest verbunden und durchgreift andererseits den Druckring 11. An dem dem Lagerkörper 7 gegenüberliegenden Ende des Führungsbolzens 13 ist ein Hebel 17 (Spannhebel) schwenkbar befestigt. Der Hebel 17 kann manuell um eine Schwenkachse S geschwenkt werden, die im Wesentlichen senkrecht zu der Längsachse L des Führungsbolzens 13 ausgerichtet ist.

Der Hebel 17 weist einen Griffteil 17a und einen Nockenteil 17b auf. Mittels des Griffteils 17a lässt sich der Hebel 17 durch einen Bediener um die Schwenkachse S bzgl. des Lagerkörpers 7 radial nach außen schwenken (s. Pfeile 18). Dadurch wird der den Nockenteil 17b bildende kurven- oder schneckenartige bzw. exzentrische Vorsprung des Hebels 17 derart auf den Druckring 11 gedrückt, dass dieser bei einem weiteren Verschwenken des Hebels 17 in Richtung des Pfeils 18 immer weiter in Richtung des Lagerkörpers 7 entlang des Führungsbolzens 13 verlagert wird. In der Fig. 1 ist der Hebel 17 in seiner Endschwenkposition gezeigt, in welcher der Hebel 17 mit einer Arretierfläche 17c auf dem Druckring 11 oder auf einem geeigneten, vorzugsweise ringförmigen Zwischenelement aufliegt. In dieser Endschwenkposition aller vorhandener Hebel 17 befindet sich der Reflektor 1 in seiner Aufspannstellung.

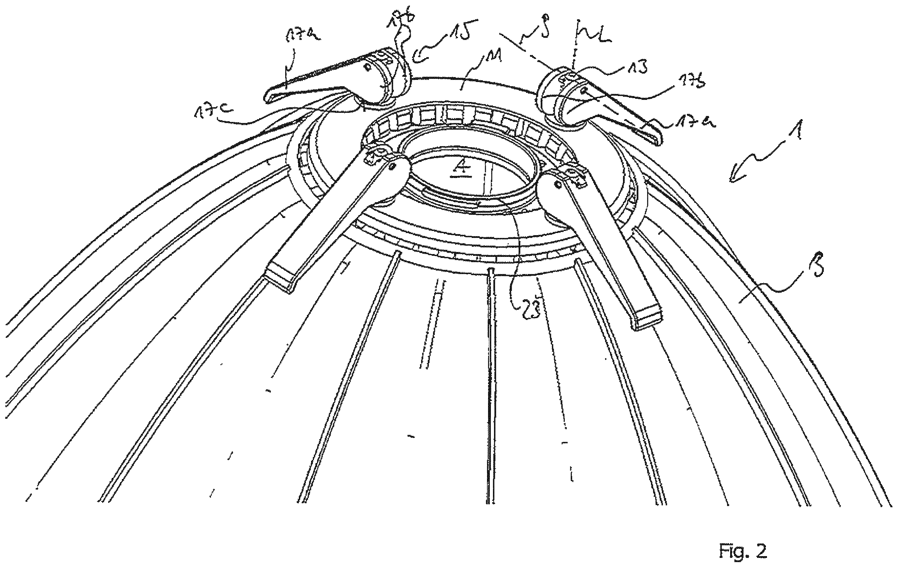

Fig. 2 zeigt eine perspektivische Darstellung des Reflektors 1 in seiner Aufspannstellung. In der in Fig. 2 gezeigten Aufspannstellung des Reflektors 1 weisen die Hebel 17 ihre Endschwenkposition auf, in der die Griffteile 17a im Wesentlichen parallel zu den Schirmspeichen 5 angeordnet sind. In diese Endschwenkposition der Hebel 17 drückt der Nockenteil 17b den Druckring 11 maximal weit in Richtung des Lagerkörpers 7. Der Abstand zwischen dem Druckring 11 und dem Lagerkörper 7 ist in der in Fig. 1 bzw. Fig. 2 gezeigten Aufspannstellung des Reflektors 1 minimal.

Insbesondere liegt der Druckring 11 in der Aufspannstellung fast auf dem Lagerkörper 7 auf.

Vorzugsweise sind einer Betätigungseinrichtung 15 jeweils mehrere Schirmspeichen 5 zugeordnet, d.h. durch die Betätigung eines einzigen Schwenkhebels 17 bzw. einer Betätigungseinrichtung 15 werden mehrere der vorhandenen Schirmspeichen 5 in ihre Aufspannstellung verlagert. In der Fig. 2 erkennbar sind insgesamt vier Betätigungseinrichtungen 15. Es versteht sich, dass die Anzahl der Betätigungseinrichtungen 15 variieren kann, und insbesondere mehr oder weniger als vier Betätigungseinrichtungen 15 vorgesehen sein können.

Wie gesagt wird durch ein Verschwenken der Hebel 17 in Richtung des Pfeils 18 bzw. radial nach außen bezüglich des Lagerkörpers 7 die Druckplatte 11 in Richtung des Lagerkörpers 7 gedrückt. Während der Verlagerung des Druckrings 11 wird eine Kraft auf den Abschnitt 9 der angelenkten Schirmspeichen 5 derart ausgeübt, dass die Schirmspeichen 5 im Anlenkpunkt des Lagerkörpers 7 verschwenkt werden, wodurch eine Drehung der Schirmspeichen 5 radial nach innen bzgl. des Lagerkörpers 7, d.h. in Richtung der Pfeile 19 um den Anlenkpunkt herum resultiert. Dadurch werden die Schirmspeichen 5 in ihre Aufspannstellung verlagert und in der Aufspannstellung mit Hilfe der Arretierfläche 17c des Hebels 17 fixiert.

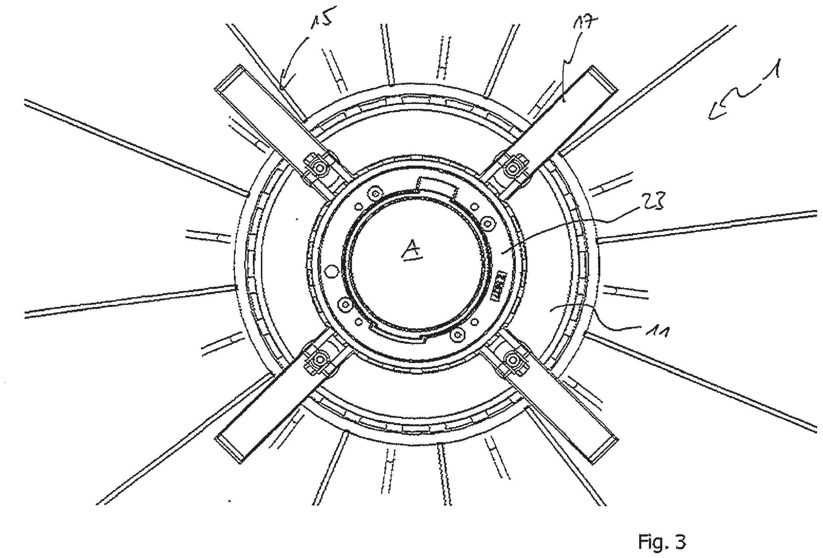

Fig. 3 zeigt eine Rückseitenansicht des Reflektors 1. Es wird deutlich, dass der Lagerkörper 7 eine Öffnung A ausbildet, in die ein vorzugsweise ringförmig ausgebildetes Adapterelement 23 einsetzbar ist. Das Adapterelement 23 kann mit dem Lagerkörper 7 verschraubt, verschweißt, verklebt oder auf sonstige Weise damit verbunden sein. Grundsätzlich ist es auch denkbar, den Lagerkörper 7 einstückig mit einem Adapterelement 23 auszubilden. Das Adapterelement 23 dient zur Aufnahme bzw. zur lösbaren Befestigung eines in der Fig. 1 und Fig. 2 nicht gezeigten beliebigen Zubehörteils, wie später noch näher erläutert wird.

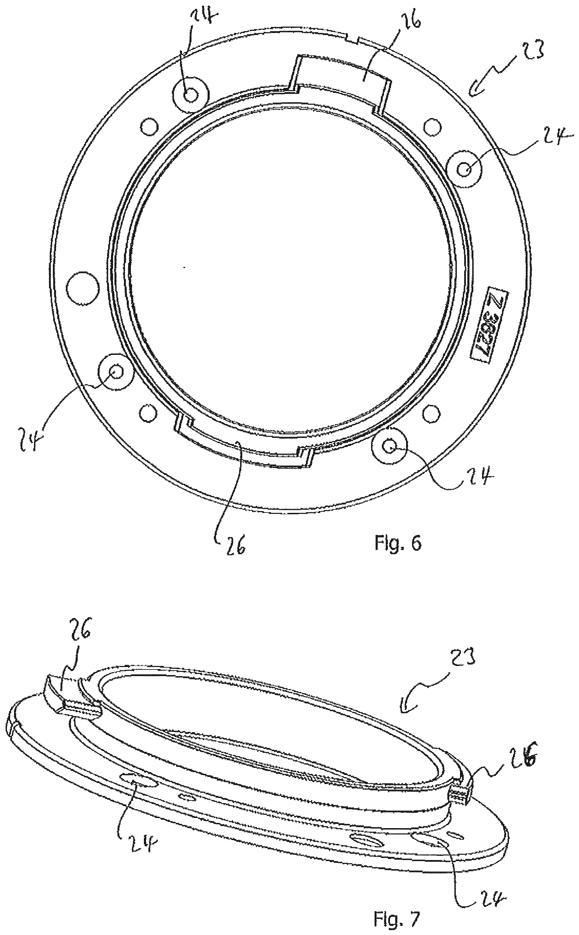

Fig. 6 zeigt eine Stirnseitenansicht des Adapterelements 23. In dem vorliegenden Ausführungsbeispiel weist das Adapterelement 23 rein beispielhaft mehrere Löcher 24 zum Verschrauben des Adapterelements mit dem Lagerkörper 7 auf, wobei der Lagerkörper entsprechende Ausnehmungen zur Aufnahme der Schrauben aufweist. Dadurch ist das Adapterelement insgesamt austauschbar ausgebildet, so dass für verschiedene an dem Reflektor zu befestigende Zubehörteile unterschiedliche Adapterelemente zum Einsatz kommen können.

In Fig. 7 ist eine perspektivische Darstellung des Adapaterelements 23 gezeigt. Es wird deutlich, dass das Adapaterelement rein beispielhaft zwei rotationssymmetrisch angeordnete Vorsprünge 26 aufweist, die zur Befestigung eines Zubehörteils, beispielsweise einer Beleuchtungseinrichtung, nach Art eines Bajonettverschlusses dienen.

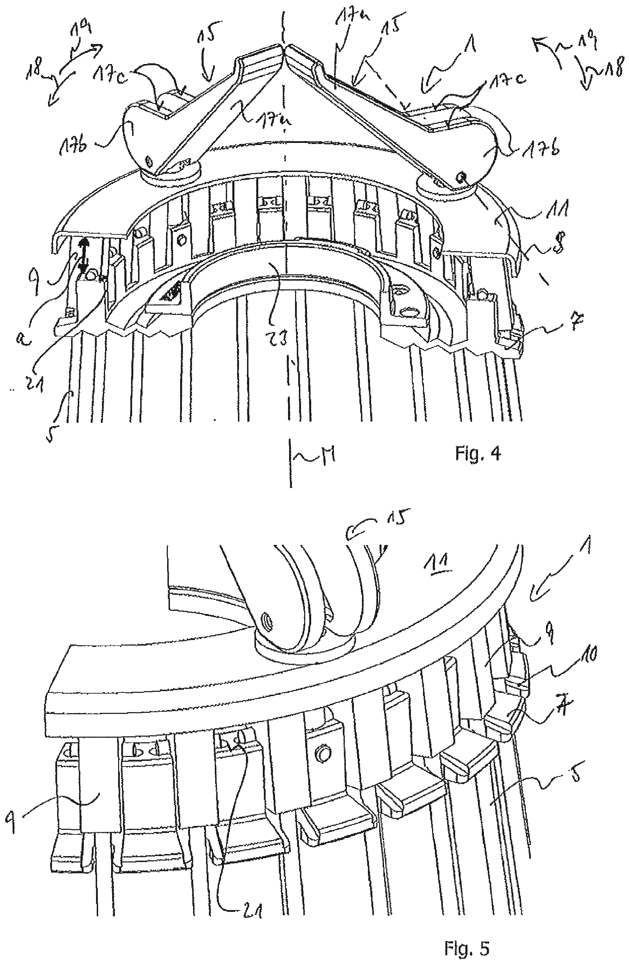

Die Fig. 4 und Fig. 5 zeigen den Reflektor 1 gemäß der Erfindung in einem zusammengefalteten Zustand. Gleiche Teile sind mit gleichen Bezugszeichen versehen, so dass insofern auf die Beschreibung zu Fig. 1 verwiesen wird, um Wiederholungen zu vermeiden.

Im Gegensatz zu der in Fig. 1 gezeigten Aufspannstellung, weist der bzw. weisen die Hebel 17 in der Fig. 4 eine Schwenkposition auf, in welcher der Druckring 11 nicht oder nur geringfügig auf den Abschnitt 9 der Schirmspeichen 5 einwirkt. Um eine gewisse Vorspannung auf den Druckring 11 zur Erleichterung des Aufspannvorgangs zu erzeugen, kann zwischen dem Druckring 11 und dem Schwenkhebel 17 ein Vorspannelement vorgesehen sein. Das Vorspannelement ist hier beispielhaft als Druckfeder F ausgebildet und in der Fig. 1 zumindest andeutungsweise erkennbar. Um von der in Fig. 1 gezeigten Endschwenkposition (Aufspannstellung des Reflektors 1) zu der in Fig. 4 gezeigten Schwenkposition zu gelangen (zusammengefalteter Zustand des Reflektors 1), muss der Griffteil 17a um seine Schwenkachse S in Richtung des Pfeils 19, d.h. radial nach innen bzgl. des Lagerkörpers 7 verschwenkt werden.

In der in Fig. 4 gezeigten Funktionsstellung weist der Druckring 11 in Richtung der Mittelachse M des Reflektors 1 einen gegenüber der Fig. 1 deutlich größeren Abstand a zu der Stirnseite 21 des Lagerkörpers 7 auf. Daher wird in dieser Funktionsstellung keine oder nur eine geringe Klemmkraft auf den über den Lagerkörper 7 herausragenden Abschnitt 9 der Schirmspeichen 5 ausgeübt. Aufgrund der reduzierten Einwirkung auf die Abschnitte 9 lassen sich die Schirmspeichen 5 im Anlenkpunkt in Richtung der Pfeile 18, d.h. also radial nach außen bzgl. des Lagerkörpers 7 verschwenken. Der Reflektor 1 weist dann seine zusammengefaltete Funktionsstellung auf, in welcher er transportierbar ist.

Es versteht sich, dass die in den Figuren gezeigte Ausführungsform der Erfindung rein beispielhaft ist und grundsätzlich auch eine motorische/maschinelle Verlagerung des Druckrings 11 in Richtung des Lagerkörpers 7 zur Ausübung einer Druck- bzw. Zugkraft auf die Abschnitte 9 der Schirmspeichen und entsprechende Mittel vorgesehen sein können. Insbesondere kann die Verlagerung des Druckrings 11 auch durch hydraulische, pneumatische, elektrische und insbesondere elektromagnetische Mittel bewirkt werden.

Ganz allgemein ist es denkbar, unabhängig von dem Druckring gemäß dem ersten Ausführungsbeispiel der Erfindung, die Einwirkung auf die überstehenden Abschnitte 9 zur Verlagerung des Reflektors 1 in seine Aufspannstellung und umgekehrt pneumatisch, hydraulisch oder elektrisch, insbesondere mittels eines elektromagnetischen Aktuators maschinell (automatisch) zu bewirken. Im Falle einer maschinellen Einwirkung auf die Abschnitte 9 sind vorzugsweise entsprechende Energieversorgungseinrichtungen, wie beispielsweise eine Batterie, ein Stromanschluss oder dergleichen vorhanden.

Sofern die Einwirkung auf die sich über die Anlenkung der Schirmspeichen 5 in dem Lagerkörper 7 hinaus erstreckenden Abschnitte 9 derselben gemäß einem anderen Ausführungsbeispiel durch ein an den freien Enden der Abschnitte 9 angreifendes Kabel, Seil oder dergleichen erfolgt, mittels dem die erwähnten Abschnitte radial nach innen ziehbar sind, kann die Betätigung des Kabels, des Seils oder dergleichen ebenfalls manuell oder maschinell erfolgen. Beispielsweise ist es denkbar, eine motorbetriebene oder händisch betätigbare Seilwinde oder dergleichen Betätigungseinrichtung vorzusehen, die beispielsweise am Lagerkörper 7 angebracht oder integral damit ausgebildet ist. Grundsätzlich ist es auch denkbar, jeden überstehenden Abschnitt 9 und das damit verbundene Kabel, Seil oder dergleichen mit einer eigenen zugeordneten, insbesondere durch einen Elektromotor angetriebenen "Miniaturseilwinde" zu versehen.

Bei einem weiteren vorteilhaften Ausführungsbeispiel der Erfindung könnte die Einwirkung auf die sich über den Lagerkörper 7 hinaus erstreckenden Abschnitte 9 der Schirmspeichen 5 durch elektromagnetische Mittel, insbesondere nach Art eines Relais oder Schütz und insbesondere durch ein oder mehrere Haft- oder Hubmagneten derart erfolgen, dass in dem Lagerkörper 7 ein oder mehrere Spulenkörper angeordnet sind, die im stromdurchflossenen Zustand die Abschnitte 9 derart mittels einer magnetischen Kraft anziehen, dass die Schirmspeichen 5 um ihren Anlenkpunkt im Lagerkörper 7 herum in ihre Aufspannstellung verlagert werden. Im stromlosen Zustand der Spulenkörper können die Schirmspeichen 5 dann ihren zusammengefalteten Zustand einnehmen. Bei dieser Ausführungsform bilden also der Lagerkörper 7 und die Abschnitte 9 zusammen einen elektromagnetischen Aktuator.

Entscheidend ist lediglich, dass auf die über die Anlenkung in dem Lagerkörper 7 hinausragenden Abschnitte 9 derart eingewirkt wird, dass durch diese Einwirkung die Schirmspeichen 5 in eine Aufspannstellung und umgekehrt bewegbar sind. Grundsätzlich erfolgt ein Aufspannen des Reflektors 1 gemäß der Erfindung also dadurch, dass ein Einwirken auf die Abschnitte 9 derart erfolgt, dass die Schirmspeichen 5 um ihren Anlenkpunkt im Lagerkörper 7 herum (hier: Schlitze 10) radial nach innen bezüglich des Lagerkörpers 7 verschwenkt werden.

Die Fig. 1, 4 und 5 machen noch deutlich, dass die Abschnitte 9 gegenüber dem übrigen Teil der Schirmspeichen 5 einen verbreiterten Durchmesser aufweisen, der einerseits verhindern soll, dass die Schirmspeichen 5 aus ihrer Lagerposition in dem Lagerkörper 7 herausrutschen können und der andererseits eine größere Angriffsfläche für eine Einwirkung auf die Abschnitte 9 bietet. Der verbreitere Durchmesser kann, wie eingangs bereits erläutert wurde, auf vielfältige Art und Weise hergestellt werden.

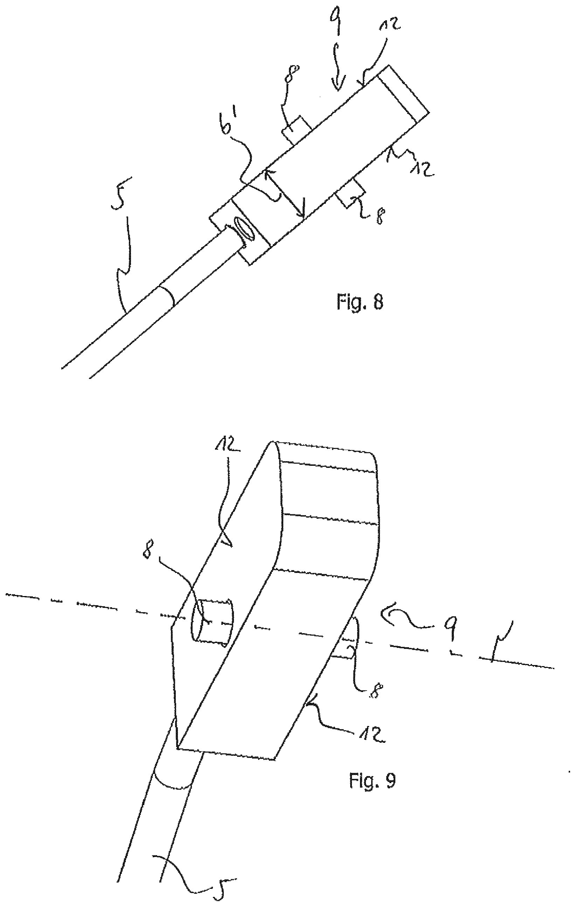

Die Fig. 8 und 9 zeigen eine Einzeldarstellung einer einen vergrößerten überstehenden Abschnitt 9 aufweisenden Schirmspeiche 5. Der Abschnitt 9 weist zwei Achsabschnitt 8 auf, die vorzugsweise einstückig mit dem Abschnitt 9 ausgebildet sind. Die Achsabschnitte 8 sind lotrecht auf gegenüberliegenden Seitenflächen 12 des Abschnitts 9 angeordnet und dienen zur Lagerung der Schirmspeichen 5 in dem Lagerkörper 7. Die beiden Achsabschnitte 8 liegen also auf einer gemeinsamen Achse und bilden auf diese Weise eine Drehachse D. Auf diese Weise wirkt der Abschnitt 9 einer Schirmspeiche 5 als beweglich gelagertes Kraftübertragungs- bzw. als Druckelement.

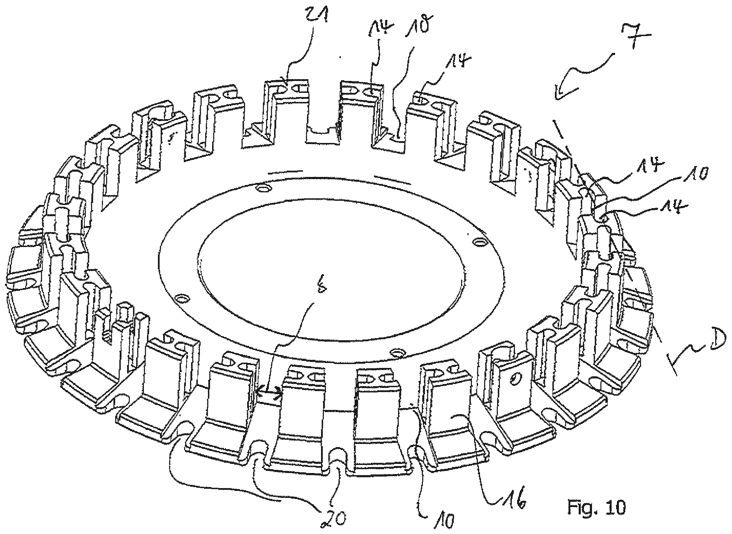

Die Achsabschnitte 8 des überstehenden Abschnitts 9 sind zur Aufnahme in entsprechend geformten Ausnehmungen 14 des Lagerkörpers 7 ausgebildet, die in Fig. 10 erkennbar sind. Jeweils zwei Ausnehmungen 14 bilden folglich ein Lager für zwei Achsabschnitte 8 einer Schirmspeiche 5. Es wird deutlich, dass jeweils zwei Ausnehmungen 14 mit einem Schlitz 10 fluchten. Die Ausnehmungen 14 sind dabei auf der der Bespannung 3 abgewandten Seite des Lagerkörpers in quaderförmigen massiven Lagerblöcken 16 angeordnet; sie erstrecken sich also von der Stirnseite 21 aus in den Lagerblock hinein. Eine randseitige Aussparung 20 in dem Lagerkörper 7 sorgt darüber hinaus für eine weitere Abstützung des Abschnitts 9 in dem Lagerkörper 7, da die Aussparung 20 an den Durchmesser der Schirmspeichen 5 angepasst ist, sodass also der querschnittsvergrößerte Abschnitt 9 nicht durch die Aussparung 20 hindurchrutschen kann. Es versteht sich, dass die Breite b des Schlitzes 10, d.h. also der Abstand zwischen zwei Lagerblöcken 16, hingegen an die Breite b' des überstehenden Abschnitts 9 angepasst sein muss. Darüber hinaus müssen die Aussparungen 20, die Schlitze 10 und die Ausnehmungen 14 derart zueinander angeordnet bzw. ausgerichtet und derart dimensioniert sein, dass sich der Reflektor 1 vollständig zusammenfalten lässt. In diesem Zustand sind die Schirmspeichen 5 dann im Wesentlichen senkrecht bezüglich der Stirnseite 21 des Lagerkörpers 7 ausgerichtet.

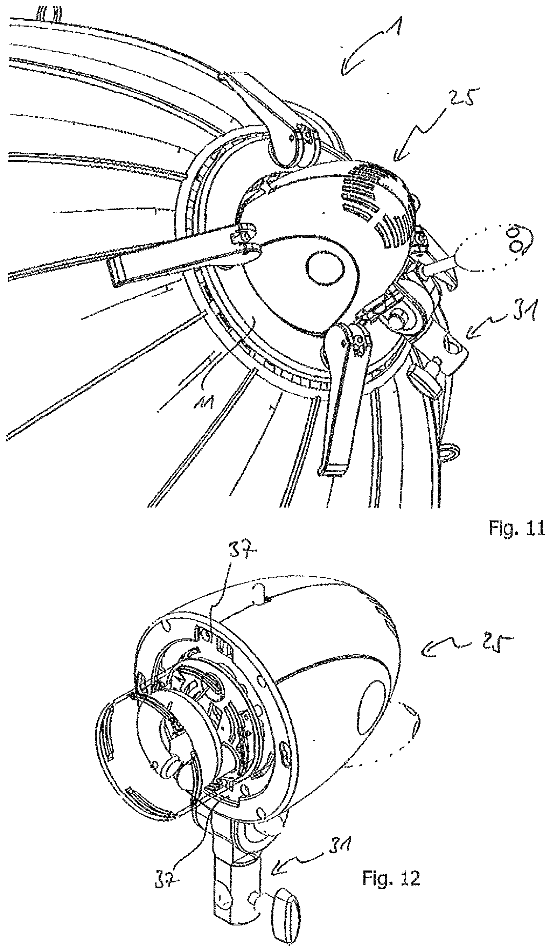

Fig. 11 zeigt eine perspektivische Rückansicht eines mit einem Zubehörteil 25 versehenen Reflektors 1. Das Zubehörteil 25 ist beispielhaft als Beleuchtungseinrichtung ausgebildet und ragt von der Rückseite des Reflektors 1 aus in diesen hinein. Das Zubehörteil 25 ist vorzugsweise mit dem Adapterelement 23 des Reflektors 1 (Fig. 6 und 7) verbunden und weist hierzu entsprechende Ausnehmungen 37 zur Aufnahme der Vorsprünge 26 des Adapterelements 24 auf, wie in Fig. 12 erkennbar ist.

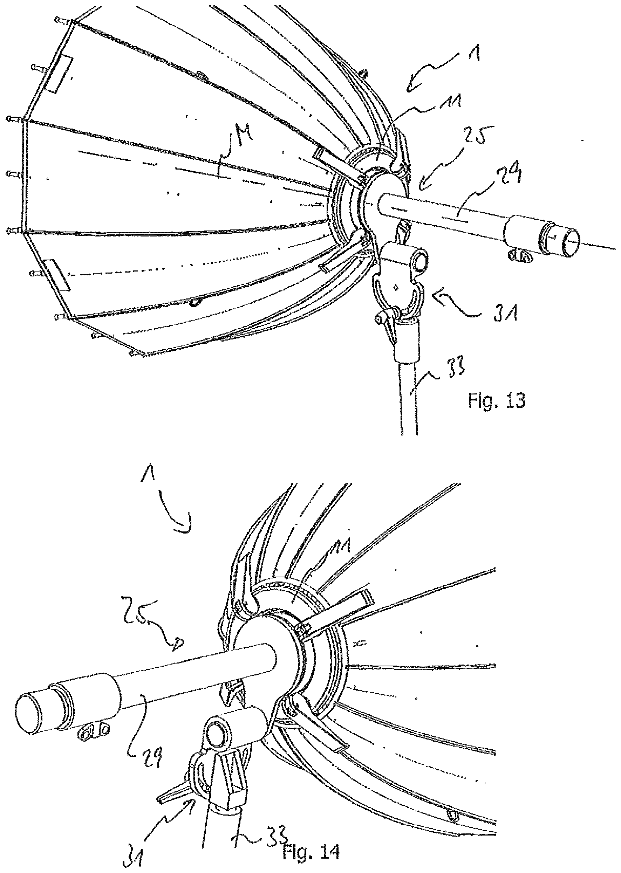

Die Fig. 13 bis 15 zeigen verschiedene Perspektiven eines aufgespannten Reflektors 1 gemäß der Erfindung. Der Reflektor 1 ist mit einem Zubehörteil 25 versehen, das an dem in den Fig. 6 und 7 gezeigten Adapterelement 23 befestigt ist. Bei dem Zubehörteil 25 handelt es sich um einen stabförmigen Träger 29, auch "Fokusrohr" genannt, mit einer damit verbundenen Halteeinrichtung 27, wobei der stabförmige Träger 29 bzw. die Halteeinrichtung 27 als Schnittstelle bzw. Adapter zur Aufnahme von verschiedenen Lichtquellen dienen kann. Die Lichtquelle ist dann also vorzugsweise am stirnseitigen Ende des stabförmigen Trägers 29 an der Halteeinrichtung 27 angeordnet, so dass sie auf der Längsmittelachse des aufgespannten Reflektors 1 liegt. Die Lichtquelle ist vorzugsweise mittels des stabförmigen Trägers 29 längsverschieblich entlang der Längsmittelachse M des aufgespannten Reflektors 1 gelagert. Denkbar ist es auch, die Lichtquelle insbesondere mittels der Halteeinrichtung 27 längsverschieblich auf dem stabförmigen Träger 29 zu lagern. In diesem Fall ist dann vorzugsweise die Lichtquelle mitsamt der Halteeinrichtung 27 auf dem stabförmigen Träger 29 beweglich gelagert.

Über verstellbare Haltemittel 31 kann der Reflektor 1 mit einem Stativ 33 verbunden werden. Bei dem Haltemittel 31 weist dann ein Stativ-Anschlussrohr auf. Das Haltemittel 31 ist außerdem vorzugsweise als Schirm-Kipp-Element ausgebildet, d.h. als eine Art Gelenk zum Ausrichten, insbesondere zum vertikalen und/oder horizontalen Kippen/Schwenken des Reflektors 1 bezüglich des Stativs 33.

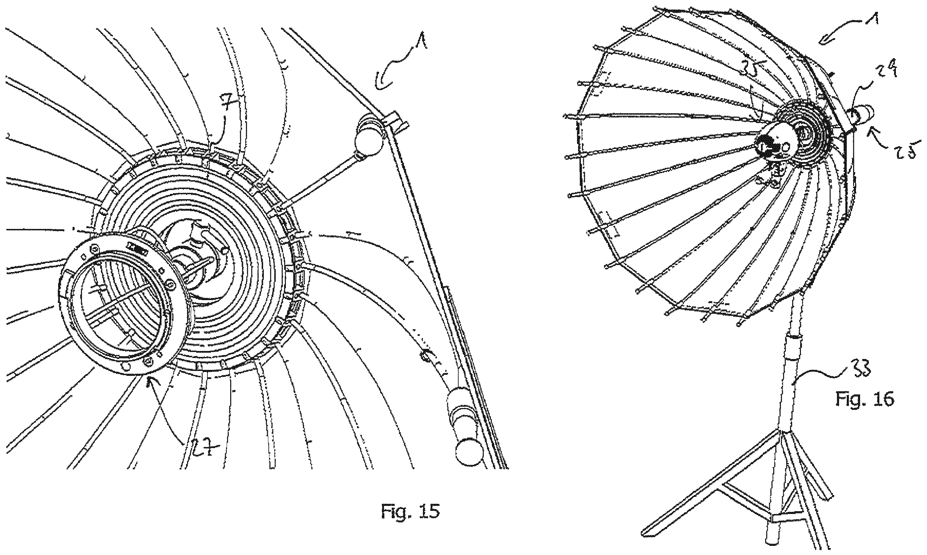

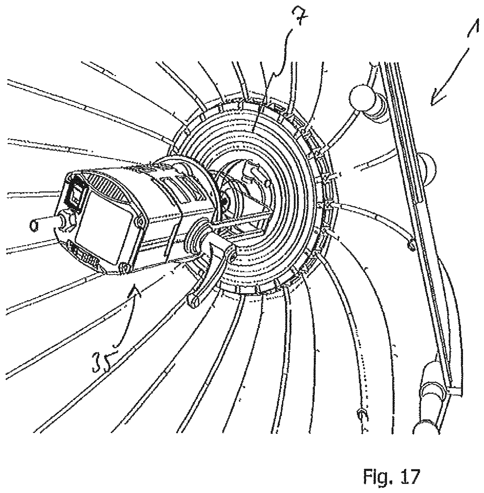

Die Fig. 16 und 17 zeigen noch weitere beispielhafte Beleuchtungseinrichtungen 35, die entweder mit dem in Fig. 15 gezeigten Haltemittel 27 oder durch eine andere geeignete Einrichtung mit dem Lagerkörper 7 bzw. mit dem Adapterelement 23 verbunden sind.

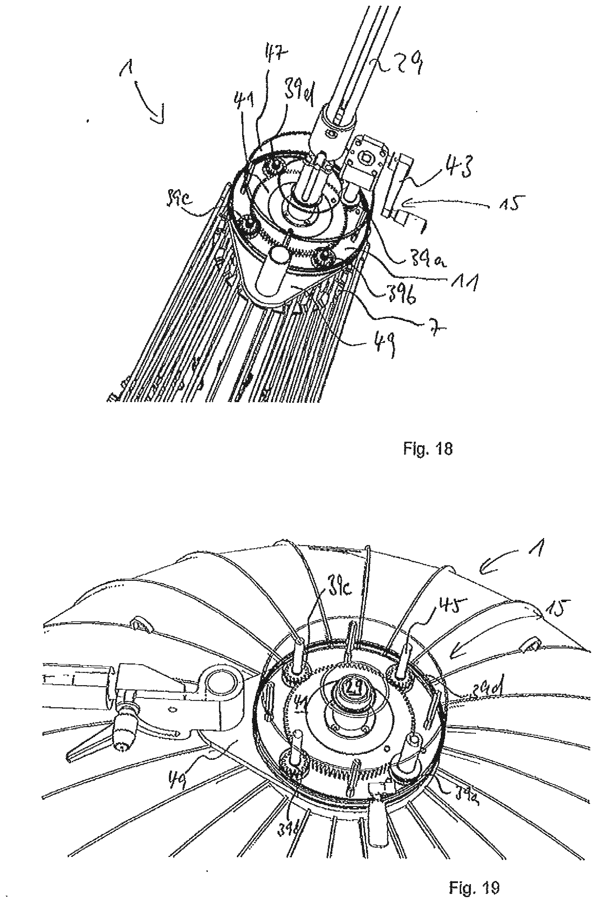

Die Fig. 18 bis 23 zeigen eine weitere Ausführungsform der Erfindung, bei der eine Krafteinwirkung auf die überstehenden Abschnitte 9 der Schirmspeichen 5 ebenfalls durch eine Druckplatte und insbesondere durch einen Druckring 11 ausgeübt wird. Im Gegensatz zu der Ausführungsform gemäß den Fig. 1 bis 17 ist bei der vorliegenden Ausführungsform jedoch ein anderer Mechanismus zur Verlagerung des Druckrings 11 vorgesehen. Insbesondere sind keine manuell betätigbaren Hebel zur Verlagerung des Druckrings vorgesehen, sondern die Verlagerung wird durch eine Betätigungseinrichtung 15 in Form einer planetengetriebeartigen Anordnung von Zahnrädern bewirkt.

Fig. 18 zeigt eine perspektivische Darstellung des Reflektors 1 in geschlossenem Zustand. Gleiche Teile sind mit gleichen Bezugszeichen versehen, so dass in diesem Zusammenhang auf die vorangegangenen Figuren verwiesen wird, um Wiederholungen zu vermeiden.

Die Betätigungseinrichtung 15 zur Verlagerung der Druckplatte ist wie gesagt nach Art eines Plantengetriebes aufgebaut und umfasst vier kleinere außenliegende Zahnräder 39a bis 39d, die in Eingriff mit einem innenliegenden größeren Zahnrad 41 stehen. Das Zahnrad 39a wird manuell über eine Handkurbel 43 angetrieben. Es versteht sich, dass das Zahnrad 39a auch mittels eines (elektro-)motorischen Antriebs oder dergleichen angetrieben werden kann. Bei Betätigung der Kurbel 43 bewirkt die Drehung des Zahnrads 39a eine Drehung des großen Zahnrads 41, welches wiederum die übrigen kleineren Zahnräder 39b, 39c und 39d in eine Drehbewegung versetzt.

Jedes der kleineren Zahnräder 39a bis 39d verfügt über ein Innengewinde, welches mit dem Außengewinde eines Gewindebolzens 45 zusammenwirkt. Entsprechend dem Führungsbolzen 13 des ersten Ausführungsbeispiels gemäß den Fig. 1 bis 17 ist der Gewindebolzen 45 mit dem Lagerkörper 7 fest verbunden und ragt durch entsprechende Durchgangsbohrungen in der Druckplatte hindurch. Auf der dem Lagerkörper 7 gegenüberliegenden Seite der Druckplatte kommen die Gewindebolzen 45 dann mit dem Innengewinde der kleineren Zahnräder 39a bis 39d in Eingriff.

Sowohl das große Zahnrad 41 als auch die kleineren Zahnräder 39a bis 39d sind vorzugsweise fest aber drehbeweglich mit der Druckplatte verbunden. Das Planetengetriebe ist von einem Gehäuse 47 umgeben, wobei die Kurbel 43 außerhalb des Gehäuses 47 angeordnet ist, um eine Betätigung des ersten Zahnrads 39a zu ermöglichen.

Die Funktionsweise des in der Figur 18 gezeigten Antriebsmechanismus ist wie folgt: Eine Betätigung der Kurbel 43 bewirkt eine Drehbewegung des Zahnrads 39a, was wie oben beschrieben eine Drehbewegung des größeren Zahnrads 41 und damit der weiteren kleinen Zahnräder 39b bis 39d zur Folge hat. Je nach Drehrichtung der Kurbel 43 erfolgt eine Verlagerung der Druckplatte mitsamt den Zahnrädern entweder in Richtung des Lagerkörpers 7 oder von dieser weg. Eine Verlagerung der Druckplatte in Richtung des Lagerkörpers 7 bewirkt eine Kraftausübung auf die überstehenden Abschnitte 9, sodass der Falt-Reflektor 1 in seine Aufspannstellung verlagert wird, wie in Fig. 19 gezeigt ist. Durch die Verlagerung der Druckplatte mittels des Planetengetriebes wird wie bei der Ausführungsform nach den Fig. 1 bis 17 eine Kraft auf die überstehenden Abschnitte 9 der Schirmspeichern 5 ausgeübt werden. Insofern unterscheidet sich die vorliegenden Ausführungsform ausschließlich durch die Art des Verlagerungsmechanismus der Druckplatte. In den Fig. 18 und 19 ist im Übrigen noch eine Schirmhalterung 49 vorgesehen, die integral mit der Druckplatte ausgebildet oder an dieser befestigt sein kann.

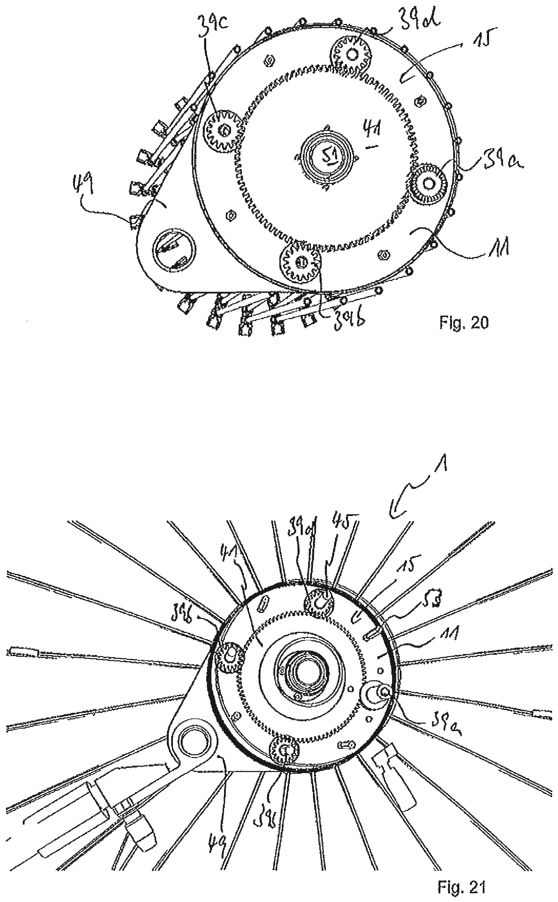

Fig. 20 zeigt eine rückseitige Draufsicht auf die Betätigungseinrichtung 15 gemäß den Fig. 18 und 19 in Form des Planetengetriebes. Gut erkennbar sind die mit dem größeren Zahnrad 41 in Eingriff stehenden kleineren Zahnräder 39a bis 39d. Weiterhin erkennbar ist eine in dem größeren Zahnrad 41 zentrisch angeordnete Öffnung 51, die zur Aufnahme des in den Fig. 18 und 19 erkennbaren stabförmigen Trägers 29 dient. Es versteht sich, dass mehr oder auch weniger als vier kleinere Zahnräder das Planetengetriebe gemäß der vorliegenden Ausführungsform realisieren können. In Abhängigkeit von der Größe des Reflektors und insbesondere von der Anzahl der Schirmspeichen können mehr oder weniger als vier kleinere Zahnräder vorgesehen sein,

Fig. 21 zeigt eine rückseitige Draufsicht auf das Planetengetriebe gemäß der zweiten Ausführungsform bei einem Falt-Reflektor 1 in Aufspannstellung. Dabei wird deutlich, dass im Gegensatz zu dem zusammengefalteten Reflektor gemäß Fig. 20 die Druckplatte mitsamt den Zahnrädern in Richtung des Lagerkörpers 7 verlagert wurde, so dass die Gewindebolzen 45 wesentlich weiter über die dem Lagerkörper 7 gegenüberliegende Seite der Druckplatte hinausragen. Zur Verbindung der Druckplatte mit dem in den Fig. 18 und 19 erkennbaren Gehäuse 47 können im Übrigen noch Verbindungsstifte 53 vorgesehen sein.

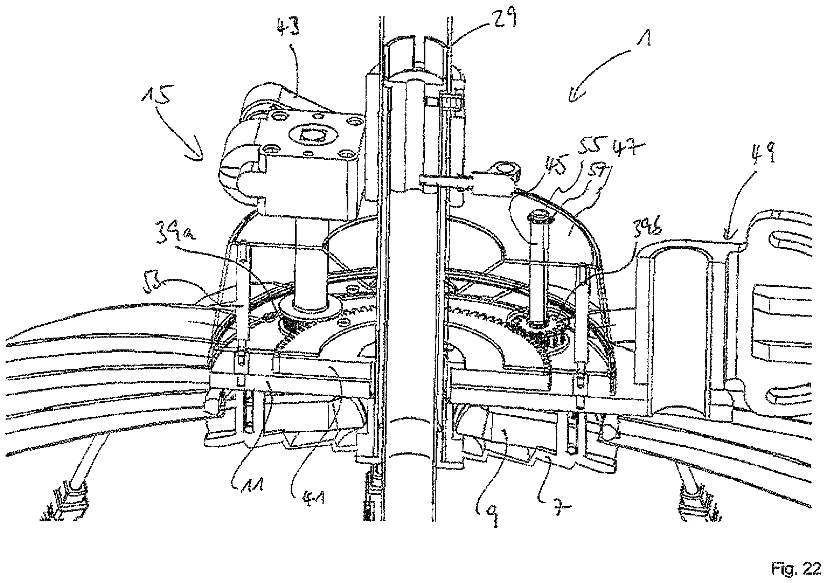

Fig. 22 zeigt eine Schnittdarstellung eines Falt-Reflektors 1 nach der Ausführungsform der Fig. 18 bis 20 in Aufspannstellung. In der Fig. 22 wird deutlich, dass die Gewindebolzen 45 an ihrem dem Lagerkörper 7 abgewandten Ende 55 ein Stoppelement 57 aufweisen, um ein vollständiges Abschrauben der Zahnräder 39a bis 39d von den Gewindebolzen 45 zu vermeiden. Die Stoppelemente 57 sind insbesondere dann notwendig, wenn kein Gehäuse 47 vorgesehen ist.

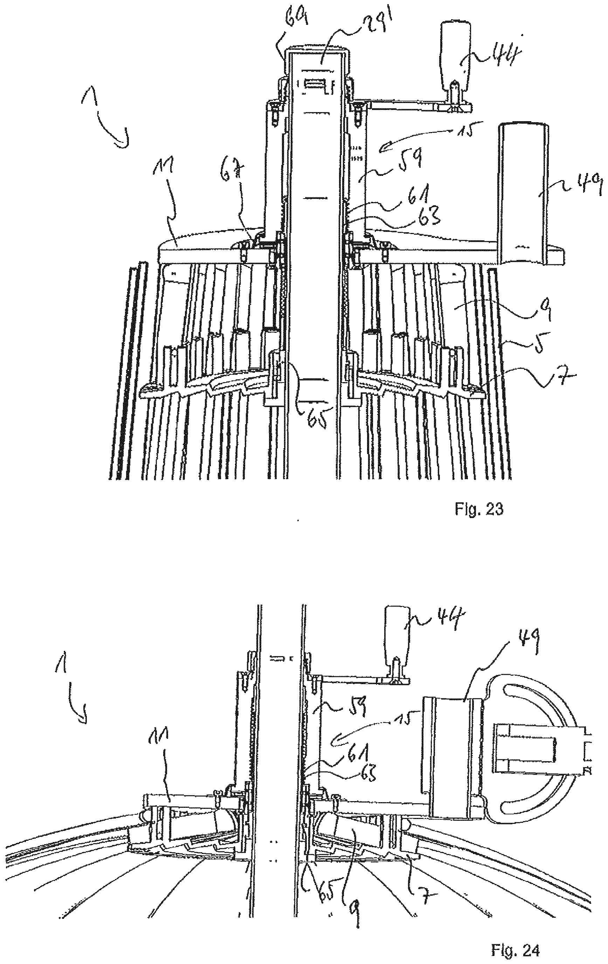

Die Fig. 23 bis 26 zeigen eine weitere Ausführungsform der Erfindung, die noch einen anderen Mechanismus zur Verlagerung der Druckplatte offenbart. Gleiche Teile sind mit gleichen Bezugszeichen versehen, so dass insofern auf die vorangegangenen Figuren verwiesen wird, um Wiederholungen zu vermeiden.

Der Betätigungsmechanismus zur Verlagerung der Druckplatte weist bei dieser Ausführungsform ein Rohrelement 59 mit einem Innengewindeabschnitt 61 auf. Der Innengewindeabschnitt 61 des Rohrelements 59 wirkt mit dem Außengewinde 63 eines Führungsrohrs 65 zusammen. Das Führungsrohr 65 ist an seinem dem Lagerkörper 7 zugewandten Ende vorzugsweise an dem Lagerkörper 7 befestigt. Das Rohrelement 59 ist vorzugsweise als Gewindemuffe ausgebildet.

Das Führungsrohr 65 und das Rohrelement 59 dienen gleichzeitig zur verschieblichen Lagerung eines vorzugsweise einstückig geformten stabförmigen Trägerelements 29'.

Das Rohrelement 59 ist mit seinem einen Ende drehbar an der Druckplatte befestigt. Dies wird mittels eines Verbindungselements 67 bewerkstelligt, welches das Rohrelement 59 ringförmig derart umgibt, dass das Rohrelement 59 an einer axialen Verlagerung relativ zu der Druckplatte gehindert wird, Hierzu ist das Verbindungselement 67 mit der Druckplatte verbunden, insbesondere mit dieser verschraubt. An seinem anderen Ende umfasst das Rohrelement 59 ein Handgriff 44, der drehfest mit dem Rohrelement 59 verbunden ist. Zum Öffnen des Falt-Reflektors 1 muss der Handgriff 44 derart betätigt werden, dass sich das Rohrelement 59 relativ zu dem Führungsrohr 65 dreht. Durch das Zusammenwirken des Innengewindeabschnitts 61 des Rohrelements 59 und des Außengewindes 63 des Führungsrohrs 65 wird eine Verlagerung der Druckplatte mit dem Rohrelement 59 bewirkt. Abhängig von der Drehrichtung des Handgriffs 44 wird eine Verlagerung der Druckplatte und des Rohrelements 59 entweder in Richtung des Lagerkörpers 7 oder von diesem weg bewirkt. Es versteht sich, dass der Handgriff 44 prinzipiell durch einen (elektro-)motorischen Antrieb oder dergleichen ersetzt werden kann.

In Fig. 24 ist der Falt-Reflektor 1 in einer geöffneten Funktionsstellung dargestellt. In dieser Funktionsstellung wurde also der Handgriff 44 und damit das Rohrelement 59 so weit gedreht, bis die Druckplatte maximal weit in Richtung des Lagerkörpers 7 verlagert wurde. In diesem Zustand wird auch eine maximale Kraft auf die überstehenden Abschnitte 9 der Schirmspeichen 5 ausgeübt.

Besonders gut erkennbar ist in den Fig. 23 und 24 noch eine beispielhafte einstückige Ausbildung zwischen der Druckplatte und der Schirmhalterung 49.

Bei dieser Ausführungsform des Betätigungsmechanismus ist das stangenförmige Trägerelement 29' vorzugsweise einstückig ausgebildet, so dass also im zusammengefalteten Zustand das stangenförmige Trägerelement 29' vollständig in den Falt-Reflektor 1 geschoben werden kann. Eine Schutzkappe 69 an einem Ende des stangenförmigen Trägerelements 29' verhindert dabei, dass es vollständig in dem Rohrelement 59 verschwindet. Die Fig. 23 macht noch deutlich, dass auch das Rohrelement 59 zur Führung des stangenförmigen Trägerelements 29' dient. In der in Fig. 23 gezeigten Position des stangenförmigen Trägerelements 29', bei der also die Schutzkappe 69 an das Rohrelement 59 anstößt, kann der Handgriff 44 ohne Schwierigkeiten durch einen Anwender manuell betätigt werden.

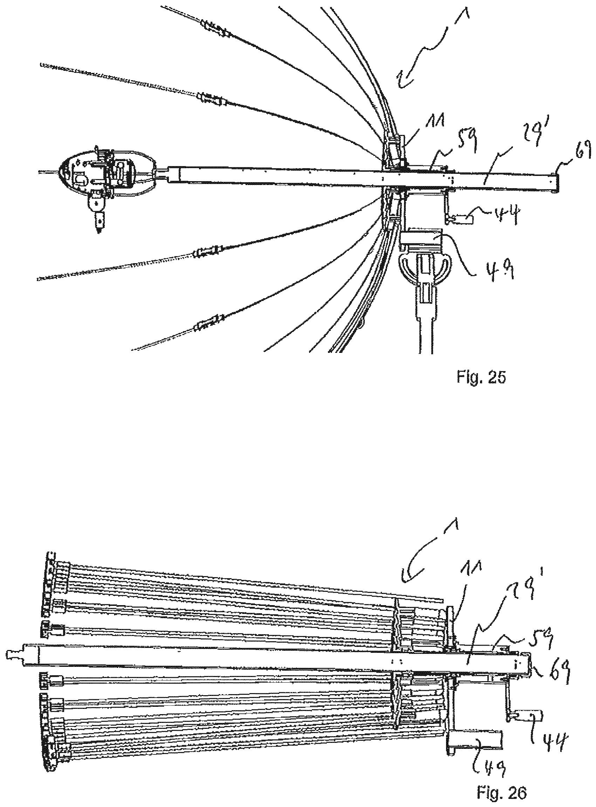

Die Fig. 25 und 26 verdeutlichen die vorteilhafte Ausführung eines einstückig ausgebildeten stangenförmigen Trägerelements 29'. Im Vergleich zu den vorhergehenden Ausführungsformen, bei denen das stangenförmige Rohrelement 29 aus zwei Rohrstücken besteht, ist es bei der vorliegenden Ausführungsform wie gesagt möglich, das stangenförmige Trägerelement 29' vollständig in den Falt-Reflektor 1 zu verlagern, was einen besonders einfachen Transport des zusammengefalteten Faltreflektors 1 ermöglicht, wie Fig. 26 deutlich erkennen lässt. Wie auch bei den vorhergehenden Ausführungsformen kann das stangenförmige Trägerelement mit verschiedenen Beleuchtungseinrichtungen verbunden werden.

Insgesamt schafft die vorliegende Erfindung einen vorteilhaften Mechanismus, der auf einfache Art und Weise das Aufspannung und Zusammenfalten eines Reflektors 1 durch einen Bediener ermöglicht und der darüber hinaus kostengünstig herstellbar ist. Die Erfindung ermöglicht ferner ein Aufspannen und Zusammenfalten eines Reflektors 1 ohne Spreizspeichen und ohne einen als Träger für die Spreizspeichen dienenden Schirmstock. Dadurch ergibt sich ein wesentlich höherer Freiheitsgrad für die Montage von Zubehör an dem Reflektorschirm. Darüber hinaus ermöglicht das vorteilhafte Adapterelement 23 eine einfache Befestigung von beliebigem Zubehör an dem Reflektor 1. Der Adapter 23 ist im Übrigen bei allen beschriebenen Ausführungsformen einsetzbar.

### Bezugszeichenliste:

- 1: Reflektor
- 3: Bespannung
- 5: Schirmspeichen
- 7: Lagerkörper
- 8: Achsabschnitte
- 9: überstehende Abschnitte
- 10: Schlitz
- 11: Druckring
- 12: Seitenfläche
- 13: Führungsbolzen
- 14: Ausnehmung
- 15: Betätigungseinrichtung
- 16: Lagerblock
- 17: Hebel
- 17a: Griffteil
- 17b: Nockenteil
- 17c: Arretierfläche
- 18: Pfeil
- 19: Pfeil
- 20: Aussparung
- 21: Stirnseite
- 23: Adapterelement
- 24: Löcher
- 25: Zubehörteil
- 26: Vorsprünge
- 27: Halteeinrichtung
- 29, 29': stabförmiger Träger
- 31: Haltemittel
- 33: Stativ
- 35: Beleuchtungseinrichtung
- 37: Ausnehmung
- 39a-d: kleine Zahnräder
- 41: großes Zahnrad
- 43: (Hand-)Kurbel
- 44: Handgriff
- 45: Gewindebolzen
- 47: Gehäuse
- 49: Schirmhalterung
- 51: Öffnung
- 53: Verbindungselemente
- 55: Ende
- 57: Stoppelement
- 59: Rohrelement
- 61: Innengewindeabschnitt
- 63: Außengewinde
- 65: Führungsrohr
- 67: Verbindungselement
- 69: Schutzkappe
- F: Vorspannelement (Feder)
- D: Drehachse
- S: Schwenkachse
- M: Mittelachse
- L: Längsachse
- A: Öffnung
- a: Abstand
- b: Breite (Schlitz 10)
- b': Breite (Abschnitt 9)

## Patentansprüche

1. Falt-Reflektor (1) mit kranzförmig an einem Lagerkörper (7) angelenkten Schirmspeichen (5), durch die eine reflektierende Bespannung (3) aufspannbar ist,
wobei sich die Schirmspeichen (5) an den ihrer Anlenkung zugekehrten Enden jeweils über diese Anlenkung hinauserstrecken, und durch Einwirkung auf diese sich über die Anlenkung hinauserstreckenden Abschnitte (9) der Schirmspeichen (5) diese in Aufspannstellung und umgekehrt bewegbar sind, wobei
die Einwirkung auf die sich über die Anlenkung der Schirmspeichen (5) hinauserstreckenden Abschnitte (9) derselben durch eine Druckplatte (11), insbesondere einen Druckring (11) erfolgt, wobei zu diesem Zweck der Druckring (11) und der Lagerkörper (7) relativ zueinander bewegbar sind, **dadurch gekennzeichnet, dass** die relative Verlagerung zwischen der Druckplatte (11) und dem Lagerkörper (7) mittels einer Betätigungseinrichtung (15) erfolgt, die mehrere Führungsbolzen (13) umfasst, die einerseits mit dem Lagerkörper (7) und andererseits mit der Druckplatte derart verbunden sind, dass die Betätigungseinrichtung (15) eine Verlagerung der Druckplatte entlang der Führungsbolzen (13) bewirkt, wobei die Betätigungseinrichtung (15) einen mit jedem Führungsbolzen (13) verbundenen manuell oder motorisch betätigbaren Hebel (17) aufweist.

2. Falt-Reflektor nach Anspruch 1,
**dadurch gekennzeichnet, dass**
der Lagerkörper (7) mit einem Adapterelement (23) zur Befestigung von Zubehör (25) und/oder einem Stativ (33) verbunden ist oder einstückig mit einem solchen Adapterelement (23) ausgebildet ist.

3. Falt-Reflektor nach Anspruch 2,
**dadurch gekennzeichnet, dass**
das Adapterelement (23) zur Befestigung einer Beleuchtungseinrichtung ausgebildet ist.

4. Falt-Reflektor nach einem der vorhergehenden Ansprüche 1 bis 3,
**dadurch gekennzeichnet, dass**
die sich jeweils über die Anlenkung an dem Lagerkörper (7) hinauserstreckenden Abschnitte (9) der Schirmspeichen (5) zwischen dem Lagerkörper (7) und der Druckplatte bzw. dem Druckring (11) eingeklemmt sind.

5. Falt-Reflektor nach einem der vorhergehenden Ansprüche,
**dadurch gekennzeichnet, dass**
der Lagerkörper (7) ringförmig ausgebildet ist.

6. Falt-Reflektor nach Anspruch 5,
**dadurch gekennzeichnet, dass**
die Schirmspeichen (5) in radial in dem Lagerkörper (7) angeordneten und zur Umfangsfläche des Lagerkörpers hin offenen Schlitzen (10) angelenkt werden.

7. Falt-Reflektor nach Anspruch 1,
**dadurch gekennzeichnet, dass**
die Einwirkung auf die sich über die Anlenkung der Schirmspeichen (5) hinauserstreckenden Abschnitte (9) derselben durch ein an deren freien Enden angreifendes Kabel, Seil oder dergleichen erfolgt, mittels dem die erwähnten Abschnitte (9) manuell oder motorisch radial nach innen ziehbar sind.

8. Falt-Reflektor nach einem der vorhergehenden Ansprüche,
**dadurch gekennzeichnet, dass**
die Schirmspeichen (5) in der Aufspannstellung fixierbar sind.

9. Falt-Reflektor nach einem der vorhergehenden Ansprüche,
**dadurch gekennzeichnet, dass**
die sich jeweils über die Anlenkung an dem Lagerkörper (7) hinauserstreckenden Abschnitte (9) der Schirmspeichen (5) einen gegenüber dem jeweiligen Rest der Schirmspeichen vergrößerten Durchmesser aufweisen.

10. Falt-Reflektor nach einem der vorhergehenden Ansprüche,
**dadurch gekennzeichnet, dass**
er keine mit den Schirmspeichen (5) verbundenen Spreizspeichen aufweist.

11. Falt-Reflektor nach einem der vorhergehenden Ansprüche,
**dadurch gekennzeichnet, dass**
der Lagerkörper (7) direkt oder indirekt an einem Stativ befestigbar ist.

12. Falt-Reflektor nach einem der vorhergehenden Ansprüche,
**dadurch gekennzeichnet, dass**
die reflektierende Bespannung (3) an ihrer Außenseite Säume oder an ihrer Innenseite Befestigungsmittel, insbesondere Schlaufen, vorzugsweise Gummischlaufen, zur Aufnahme der Schirmspeichen (5) aufweist.

13. Falt-Reflektor nach einem der vorhergehenden Ansprüche,
**dadurch gekennzeichnet, dass**
der Reflektor Befestigungsmittel, insbesondere Ösen, aufweist, über die er aufhängbar ist.

14. Falt-Reflektor nach einem der vorhergehenden Ansprüche,
**dadurch gekennzeichnet, dass**
die reflektierende Bespannung (3) eine metallisierte Folie ist.

15. Falt-Reflektor nach einem der vorhergehenden Ansprüche,
**dadurch gekennzeichnet, dass**
er wenigstens 8 oder 12, insbesondere 16, vorzugsweise 24 Schirmspeichen (5) aufweist.

16. Falt-Reflektor nach einem der vorhergehenden Ansprüche,
**dadurch gekennzeichnet, dass**
die Schirmspeichen (5) aus glasfaserverstärktem Kunststoff, aus kohlefaserverstärktem Kunststoff und/oder aus Metall, insbesondere aus Stahl ausgebildet sind.

17. Falt-Reflektor nach einem der vorhergehenden Ansprüche,
**dadurch gekennzeichnet, dass**
sich durch den Lagerkörper (7) ein ein- oder mehrteiliger stabförmiger Träger (29, 29') für eine Lichtquelle insbesondere längsverschieblich hindurch erstreckt, derart, dass die Lichtquelle bei einem längsverschieblich gelagerten Träger mit diesem innerhalb der Schirmbespannung (3) axial verlagerbar ist.

18. Falt-Reflektor nach Anspruch 17,
**dadurch gekennzeichnet, dass**
die Lichtquelle am stirnseitigen Ende des stabförmigen Trägers (29, 29') angeordnet ist, sodass sie auf der Längsmittelachse des aufgespannten Reflektors (1) liegt.

19. Falt-Reflektor nach Anspruch 18,
**dadurch gekennzeichnet, dass**
die Lichtquelle auf dem Träger (29, 29') längsverschieblich gelagert ist.

20. Falt-Reflektor nach einem der vorhergehenden Ansprüche,
**dadurch gekennzeichnet, dass**
die relative Verlagerung zwischen der Druckplatte und dem Lagerkörper (7) mittels einer maschinellen Betätigungseinrichtung erfolgt, insbesondere mittels eines elektromagnetischen, pneumatischen oder hydraulischen Antriebs.

21. Falt-Reflektor nach einem der vorhergehenden Ansprüche,
**dadurch gekennzeichnet, dass**
die Betätigungseinrichtung (15) eine Verlagerung der Druckplatte entlang eines Gewindebolzens (45) bewirkt.

22. Falt-Reflektor nach einem der vorhergehenden Ansprüche,
**dadurch gekennzeichnet, dass**
die Betätigungseinrichtung (15) zur Verlagerung der Druckplatte als manuell oder motorisch betriebenes Planetengetriebe ausgebildet ist.

23. Falt-Reflektor nach einem der vorhergehenden Ansprüche,
**dadurch gekennzeichnet, dass**
die Betätigungseinrichtung (15) ein ein Außengewinde (63) aufweisendes Führungsrohr (65) aufweist, welches mit dem Lagerkörper (7) drehfest verbunden ist, und welches mit dem Innengewindeabschnitt (61) eines Rohrelements (59) zusammenwirkt, welches mit der Druckplatte drehbeweglich verbunden ist.

24. Falt-Reflektor nach einem der vorhergehenden Ansprüche,
**dadurch gekennzeichnet, dass**
das Rohrelement (59) maschinell oder manuell, insbesondere mittels eines Handgriffs (44) betätigbar ist.

25. Verwendung eines Falt-Reflektors nach einem der vorhergehenden Ansprüche zur Installation von Sound-/Lichtquellen im Inneren der reflektierenden Bespannung.

## Claims

1. Folding reflector (1) with umbrella ribs (5) that are annularly hinge-mounted on a mounting body (7), by means of which a reflective covering (3) can be clamped open,
wherein
at the ends facing their hinge-connection the umbrella ribs (5) each extend beyond said connection, and by acting on these sections (9) of the umbrella ribs (5) extending beyond the mounting, the ribs can be moved into the clamped open position and vice versa, wherein
the action on the sections (9) of the umbrella ribs (5) extending beyond the mounting of the same is effected by means of a pressure plate (11), in particular a pressure ring (11), wherein for this purpose the pressure ring (11) and the mounting body (7) can be moved relative to each other,
**characterized in that**
the relative displacement between the pressure plate (11) and the mounting body (7) is effected by means of an actuating device (15), which comprises a plurality of guide pins (13), which are connected both to the mounting body (7) and to the pressure plate in such a way that the actuating device (15) causes a displacement of the pressure plate along the guide pin (13), wherein
the actuating device (15) has a lever (17) connected to each guide pin (13), that can be activated manually or by a motor.

2. Folding reflector according to Claim 1,
**characterized in that**
the mounting body (7) is connected to an adapter element (23) for fastening accessories (25) and/or to a tripod (33) or else is formed integrally with such an adapter element (23).

3. Folding reflector according to Claim 2,
**characterized in that**
the adapter element (23) is designed for fastening a lighting device.

4. Folding reflector according to any one of the preceding Claims 1 to 3,
**characterized in that**
the sections (9) of the umbrella ribs (5) extending past the hinge connection to the mounting body (7) are clamped between the mounting body (7) and the pressure plate or pressure ring (11).

5. Folding reflector according to any one of the preceding claims,
**characterized in that**
the mounting body (7) is designed to be annular.

6. Folding reflector according to Claim 5,
**characterized in that**
the umbrella ribs (5) are hinge-connected in slots (10) that are arranged radially in the mounting body (7) and open to the circumferential surface of the mounting body.

7. Folding reflector according to Claim 1,
**characterized in that**
the action on the sections (9) of the umbrella ribs (5) extending beyond the connection of the same is effected by a cable, rope or the like that engages with the free ends thereof, by means of which the said sections (9) can be pulled radially inwards either by manual or motor-driven means.

8. Folding reflector according to any one of the preceding claims,
**characterized in that**
the umbrella ribs (5) can be fixed in the clamped open position.

9. Folding reflector according to any one of the preceding claims,
**characterized in that**
the sections (9) of the umbrella ribs (5) extending beyond the hinge-connection to the mounting body (7) have an enlarged diameter compared with the rest of the umbrella ribs.

10. Folding reflector according to any one of the preceding claims,
**characterized in that**
it has no spreading ribs connected to the umbrella ribs (5).

11. Folding reflector according to any one of the preceding claims,
**characterized in that**
the mounting body (7) can be fastened directly or indirectly to a tripod.

12. Folding reflector according to any one of the preceding claims,
**characterized in that**
the reflective covering (3) has seams on its outer side or fastening means on its inner side, in particular loops, preferably elastic loops, for receiving the umbrella ribs (5).

13. Folding reflector according to any one of the preceding claims,
**characterized in that**
the reflector has fastening means, in particular eyes, via which it can be suspended.

14. Folding reflector according to any one of the preceding claims,
**characterized in that**
the reflective covering (3) is a metallized foil.

15. Folding reflector according to any one of the preceding claims,
**characterized in that**
it has at least 8 or 12, in particular 16, preferably 24 umbrella ribs (5).

16. Folding reflector according to any one of the preceding claims,
**characterized in that**
the umbrella ribs (5) are made of glass-fibre reinforced plastic, carbon-fibre reinforced plastic and/or metal, in particular steel.

17. Folding reflector according to any one of the preceding claims,
**characterized in that**
a single-part or multi-part rod-shaped support (29, 29') for a light source extends through the mounting body (7), in particular in a longitudinally displaceable manner, in such a way that in the case of a longitudinally displaceably mounted support the light source can be axially displaced therewith within the umbrella covering (3).

18. Folding reflector according to Claim 17,
**characterized in that**
the light source is arranged on the front-facing end of the rod-shaped carrier (29, 29'), so that it is located on the longitudinal central axis of the clamped open reflector (1).

19. Folding reflector according to Claim 18,
**characterized in that**
the light source is mounted on the support (29, 29') in a longitudinally displaceable manner.

20. Folding reflector according to any one of the preceding claims,
**characterized in that**
the relative displacement between the pressure plate and the mounting body (7) is effected by means of a mechanical actuating device, in particular by means of an electromagnetic, pneumatic or hydraulic drive.

21. Folding reflector according to any one of the preceding claims,
**characterized in that**
the actuating device (15) causes a displacement of the pressure plate along a threaded bolt (45).

22. Folding reflector according to any one of the preceding claims,
**characterized in that**
the actuating device (15) for displacing the pressure plate is designed as a manually driven or motor-driven planetary gear.

23. Folding reflector according to any one of the preceding claims,
**characterized in that**
the actuating device (15) has a guide tube (65) having an external thread (63), which is connected to the mounting body (7) in a rotationally fixed manner, and which interacts with the internally threaded section (61) of a tube element (59), which is connected to the pressure plate in a rotationally movable manner.

24. Folding reflector according to any one of the preceding claims,
**characterized in that**
the tube element (59) can be actuated automatically or manually, in particular by means of a handle (44).

25. Use of a folding reflector according to any one of the preceding claims for the installation of sound/light sources inside the reflective covering.

## Revendications

1. Réflecteur pliant (1) pourvu de baleines (5) articulées en forme de couronne sur un corps de logement (7) grâce auxquelles un entoilage (3) réfléchissant est déployable,
sur leurs extrémités qui font face à leur articulation, les baleines (5) s'étendant chacune au-delà de ladite articulation et par action sur lesdits segments (9) des baleines (5) qui s'étendent au-delà de l'articulation, celles-ci étant mobiles en position déployée et inversement,
l'action sur les segments (9) des baleines (5) qui s'étendent au-delà de l'articulation de celles-ci étant exercée par une plaque de pression (11), notamment par une bague de pression (11), à cette fin, la bague de pression (11) et le corps de logement (7) étant mobiles l'un par rapport à l'autre, **caractérisé en ce que**
le déplacement relatif entre la plaque de pression (11) et le corps de logement (7) s'effectue à l'aide d'un système de manoeuvre (15) qui comprend plusieurs boulons de guidage (13) qui sont reliés d'une part avec le corps de logement (7) et d'autre part avec la plaque de pression, de telle sorte que le système de manoeuvre (15) provoque un déplacement de la plaque de pression le long des boulons de guidage (13),
le système de manoeuvre (15) comportant respectivement un levier (17) à action manuelle ou motorisée, relié avec chaque boulon de guidage (13).

2. Réflecteur pliant selon la revendication 1, **caractérisé en ce que** le corps de logement (7) est relié avec un élément adaptateur (23) pour la fixation d'accessoires (25) et/ou avec un trépied (33) ou est conçu en monobloc avec un tel élément adaptateur (23).

3. Réflecteur pliant selon la revendication 2, **caractérisé en ce que** l'élément adaptateur (23) est conçu pour la fixation d'un système d'éclairage.

4. Réflecteur pliant selon l'une quelconque des revendications précédentes 1 à 3, **caractérisé en ce que** les segments (9) des baleines (5) qui s'étendent respectivement au-delà de l'articulation sur le corps de logement (7) sont enserrés entre le corps de logement (7) et la plaque de pression ou la bague de pression (11).

5. Réflecteur pliant selon l'une quelconque des revendications précédentes, **caractérisé en ce que** le corps de logement (7) est conçu de forme annulaire.

6. Réflecteur pliant selon la revendication 5, **caractérisé en ce qu'**on articule les baleines (5) dans des fentes (10) placées en direction radiale dans le corps de logement (7) et ouvertes en direction de la surface périphérique du corps de logement.

7. Réflecteur pliant selon la revendication 1, **caractérisé en ce que** l'action sur les segments (9) des baleines (5) qui s'étendent au-delà de l'articulation de celles-ci est exercée par un câble, une corde ou similaire qui s'engage sur les extrémités libres de celles-ci, à l'aide duquel ou de laquelle les segments (9) évoqués peuvent être tirés manuellement ou par moteur vers l'intérieur.

8. Réflecteur pliant selon l'une quelconque des revendications précédentes, **caractérisé en ce que** les baleines (5) peuvent se fixer dans la position déployée.

9. Réflecteur pliant selon l'une quelconque des revendications précédentes, **caractérisé en ce que** les segments (9) des baleines (5) qui s'étendent respectivement au-delà de l'articulation sur le corps de logement (7) présentent un diamètre agrandi par rapport au reste respectif des baleines.

10. Réflecteur pliant selon l'une quelconque des revendications précédentes, **caractérisé en ce qu'**il ne comporte aucune baleine de déploiement reliée avec les baleines (5).

11. Réflecteur pliant selon l'une quelconque des revendications précédentes, **caractérisé en ce que** le corps de logement (7) peut se fixer directement ou indirectement sur un trépied.

12. Réflecteur pliant selon l'une quelconque des revendications précédentes, **caractérisé en ce que** l'entoilage (3) réfléchissant comporte sur sa face extérieure des ourlets ou sur sa face intérieure des moyens de fixation, notamment des boucles, de préférence des boucles en caoutchouc, destinés à recevoir les baleines (5).

13. Réflecteur pliant selon l'une quelconque des revendications précédentes, **caractérisé en ce que** le réflecteur comprend des moyens de fixation, notamment des oeillets, par l'intermédiaire desquels il peut s'accrocher.

14. Réflecteur pliant selon l'une quelconque des revendications précédentes, **caractérisé en ce que** l'entoilage (3) réfléchissant est un film métallisé.

15. Réflecteur pliant selon l'une quelconque des revendications précédentes, **caractérisé en ce qu'**il comporte au moins 8 ou 12, notamment 16, de préférence 24 baleines (5).

16. Réflecteur pliant selon l'une quelconque des revendications précédentes, **caractérisé en ce que** les baleines (5) sont conçues en un matière plastique renforcée par fibres de verres, en une matière plastique renforcée par fibres de carbone et/ou en un métal, notamment en acier.

17. Réflecteur pliant selon l'une quelconque des revendications précédentes, **caractérisé en ce qu'**un support en forme de tige (29, 29') en un ou en plusieurs éléments pour une source lumineuse s'étend, notamment en étant déplaçable longitudinalement à travers le corps de logement (7), de telle sorte que lorsque le support est logé en déplacement longitudinal, la source lumineuse soit déplaçable en direction axiale avec celui-ci, à l'intérieur de l'entoilage de parapluie (3).

18. Réflecteur pliant selon la revendication 17, **caractérisé en ce que** la source lumineuse est placée sur l'extrémité frontale du support en forme de tige (29, 29'), de sorte à reposer sur l'axe médian longitudinal du réflecteur (1) déployé.

19. Réflecteur pliant selon la revendication 18, **caractérisé en ce que** la source lumineuse est logée en étant translatable en longueur sur le support (29, 29').

20. Réflecteur pliant selon l'une quelconque des revendications précédentes, **caractérisé en ce que** le déplacement relatif entre la plaque de pression et le corps de logement (7) s'effectue à l'aide d'un système de manoeuvre mécanique, notamment d'un entraînement électromagnétique, pneumatique ou hydraulique.

21. Réflecteur pliant selon l'une quelconque des revendications précédentes, **caractérisé en ce que** le système de manoeuvre (15) provoque un déplacement de la plaque de pression le long d'un boulon fileté (45).

22. Réflecteur pliant selon l'une quelconque des revendications précédentes, **caractérisé en ce que** le système de manoeuvre (15) destiné à déplacer la plaque de pression est conçu sous la forme d'un engrenage planétaire à action manuelle ou motorisée.

23. Réflecteur pliant selon l'une quelconque des revendications précédentes, **caractérisé en ce que** le système de manoeuvre (15) comporte un tube de guidage (65) pourvu d'un filetage (63), lequel est relié de manière solidaire en rotation avec le corps de logement (7) et lequel coopère avec un tronçon de taraudage (61) d'un élément tubulaire (59) qui est relié de manière mobile en rotation avec la plaque de pression.

24. Réflecteur pliant selon l'une quelconque des revendications précédentes, **caractérisé en ce que** l'élément tubulaire (59) est susceptible d'être actionné par voie mécanique ou manuelle, notamment à l'aide d'une poignée (44).

25. Utilisation d'un réflecteur pliant selon l'une quelconque des revendications précédentes pour l'installation de sources sonores/lumineuses à l'intérieur de l'entoilage réfléchissant.
